# EUROPÄISCHE PATENTSCHRIFT

(11) **EP 3 545 615 B1**
(45) Veröffentlichungstag und Bekanntmachung des Hinweises auf die Patenterteilung: **17.01.2024**
(21) Anmeldenummer: 17797615.6
(22) Anmeldetag: 08.11.2017
(51) Int. Cl.: H02P 6/24, F25B 1/02, F25B 49/02

(54) **VERFAHREN ZUM ANHALTEN EINES HUBKOLBEN-VERDICHTERS UND HUBKOLBEN-VERDICHTER EINES KÄLTEGERÄTES, KLIMAGERÄTES ODER EINER WÄRMEPUMPE SOWIE KÄLTEGERÄT, KLIMAGERÄTS ODER WÄRMEPUMPE DAMIT**
METHOD FOR STOPPING A RECIPROCATING COMPRESSOR, AND RECIPROCATING COMPRESSOR OF A REFRIGERATION DEVICE, OF AN AIR CONDITIONING DEVICE, OR OF A HEAT PUMP, AND REFRIGERATION DEVICE, AIR CONDITIONING DEVICE, OR HEAT PUMP HAVING SAID RECIPROCATING COMPRESSOR
PROCÉDÉ D'ARRÊT D'UN COMPRESSEUR À PISTON ET COMPRESSEUR À PISTON D'UN APPAREIL DE FROID, D'UN APPAREIL DE CLIMATISATION OU D'UNE POMPE À CHALEUR, AINSI QU'APPAREIL DE FROID, APPAREIL DE CLIMATISATION OU POMPE À CHALEUR ÉQUIPÉ(E) DUDIT COMPRESSEUR À PISTON

(30) Priorität: 22.11.2016 DE 102016222958
(43) Veröffentlichungstag der Anmeldung: 02.10.2019
(73) Patentinhaber: BSH Hausgeräte GmbH, 81739 München (DE)
(72) Erfinder: BECKMANN, Tommy, 78247 Hilzingen (DE); KLEIN, Moritz, 89537 Giengen (DE); PAULDURO, Achim, 89129 Albeck (DE)
(86) Internationale Anmeldenummer: PCT/EP2017/078552
(87) Internationale Veröffentlichungsnummer: WO 2018/095729

(56) Entgegenhaltungen:
- CN-A- 104 061 145
- CN-A- 105 698 453
- DE-A1-102014 217 006
- JP-A- H0 960 990
- JP-A- H08 219 526
- JP-A- 2014 155 268
- US-A1- 2011 256 005

## Beschreibung

Die vorliegende Erfindung betrifft ein Verfahren zum Anhalten eines Hubkolben-Verdichters und einen Hubkolben-Verdichter eines Kältegerätes, Klimagerätes oder einer Wärmepumpe sowie ein Kältegerät, Klimagerät oder Wärmepumpe mit dem Hubkolbenverdichter.

Das Verfahren zum Anhalten eines Hubkolben-Verdichters und der Hubkolbenverdichter wenden sich an Anwendungssituationen mit einem BLDC Motor und betreffen die Eigenschaft von Hubkolbenverdichtern, dass eine Last über eine mechanische Umdrehung des Motors ungleichmäßig anliegt. Eine typische derartige Anwendungssituation ist ein Hubkolbenverdichter eines Haushaltskältegeräts.

Ein Hubkolbenverdichter muss beim Einsatz in einem Haushaltskühlergerät möglichst ruhig abschalten bzw. zum Stillstand kommen. Dabei soll die Geräuschentwicklung beim Stopp des Verdichters möglichst gering sein. Je nach Druckverhältnissen auf Saug- und Druckseite des Hubkolbenverdichters oder dem mechanischen Aufbau des Verdichters können dabei jedoch Geräusche entstehen. Diese Geräusche entstehen typischerweise durch den Kompressionsmechanismus, der durch die Massenträgheit des Antriebs bei einer starken Drehzahländerung eine Auslenkung der Antriebseinheit zur Folge haben kann. Dabei kann ggf. die Antriebseinheit innen an einer Verdichterkapsel anschlagen. Die DE102014217006A1, JPHOS219526A, JPH0960990A, CN105698453A, CN104061145A, WO 2016 030 250 und EP 2 669 519 B1 beschreiben ein Bremsen eines Verdichters eines Kältegerätes.

Die JP2014155268A offenbart eine Steuerung eines Hubkolbenverdichters.

Die US 2011/256005 A1 offenbart eine Steuerung eines Hubkolbenverdichters mit einem BLDC Motor.

Es ist eine Aufgabe der vorliegenden Erfindung, in einem Hubkolbenverdichter bei einem Anhalten ein mögliches Vibrieren oder Anschlagen einer gefedert gelagerten Pumpen-Motorkonstruktion im Inneren des Hubkolbenverdichters zu verhindern.

Diese Aufgabe wird durch Gegenstände mit den Merkmalen nach den unabhängigen Ansprüchen gelöst. Vorteilhafte Ausgestaltungen der Erfindung sind Gegenstand der abhängigen Ansprüche.

Die Erfindung wendet sich an einen BLDC Motor eines Hubkolbenverdichters, insbesondere eines Haushaltskältegeräts, bei dem in einem Rotor mehrere permanentmagnetische Pol-Paare angeordnet sind. In Wicklungen des Stators werden magnetische Pol-Paare elektrisch erzeugt durch eine geeignete gesteuerte Bestromung der Wicklungen. Dies erfolgt häufig mit einem umlaufenden Spannungsvektor mit einer oder mehreren, insbesondere drei, Phasen, dem Drehfeld. Die umlaufenden magnetischen Pol-Paare nehmen die mehreren permanent-magnetischen Pol-Paare und damit den Rotor mit. Bei drei magnetischen Pol-Paaren und drei Phasen entsprechen drei Umdrehungen des Spannungsvektors einer mechanischen Umdrehung des Motors.

Der Hubkolben des Hubkolbenverdichters ist über einen Pleuel mit dem Motor verbunden, so dass einer Umdrehung des Motors ein Kompressionszyklus, also eine vollständige Hin- und Her-Bewegung des Hubkolbens entspricht. Als Anfangs- und Endpunkt kann eine beliebige Kolbenposition definiert werden, jedoch ist es praktisch vorteilhaft, den unteren Totpunkt der Kolbenbewegung als Anfangs- und Endpunkt zu einem Kompressionszyklus wählen.

Das erfindungsgemäße Verfahren zum Anhalten eines Hubkolben-Verdichters geht aus von einem Verdichter, der einen bürstenlosen Motor mit Wicklungen aufweist. Gemäß dem Verfahren erfolgt zunächst ein Drehen des Motors mit einer Betriebsdrehzahl. In diesem normalen Betriebszustand wird der Motor üblicherweise geregelt betrieben. Nun wird ein Signal zum Anhalten erhalten. Es folgt - sofort oder später - ein Durchführen eines unterstützten Auslaufvorgangs durch Bestromen der Wicklungen mit einem Antriebsstrom mit einer Frequenz. Die Frequenz verläuft gemäß einer vorgegebenen abnehmenden Funktion, wobei über einen Kompressionszyklus ein verlangsamen des Motors aufgrund einer Last überwiegt gegenüber einer Beschleunigung des Motors aufgrund der Bestromung. Damit ist sichergestellt, dass der Motor nicht durch das angelegte Drehfeld aktiv gebremst wird, jedoch aber auch nicht unkontrolliert durch abrupte Lastwechsel in starke Schwingungen gerät und an die Verdichterkapsel schlägt.

Optional kann auf das Signal zum Anhalten ein Anfahren einer vorgegebenen Zieldrehzahl erfolgen, geregelt oder gesteuert, ab deren Erreichen das Durchführen des unterstützten Auslaufvorgangs erfolgt.

Es ist vorteilhaft, wenn die erfindungsgemäße Steuerung, die als Software oder Hardware implementiert sein kann, zum Durchführen des unterstützten Auslaufvorgangs in einen Steuerbetrieb schaltet. In diesem Betriebsmodus wird die Drehfeldfrequenz durch eine festgelegte Zeit- bzw. Frequenzkurve vorgegeben. In dem Modus Durchführen des unterstützten Auslaufvorgangs wird die Drehfeldfrequenz durch eine festgelegte Zeit / Frequenzkurve vorgegeben. Nach Erhalten des Signals zum Anhalten kann der Modus Durchführen des unterstützten Auslaufvorgangs sofort oder alternativ nach einem Vorbereitungsvorgang beginnen. Ein solcher Vorbereitungsmodus ist beispielsweise ein Anfahren einer Zieldrehzahl, bei deren Erreichen das Durchführen des unterstützten Auslaufvorgangs beginnt.

Erfindungsgemäß ist die vorgegebene abnehmende Funktion eine nicht lineare Funktion. Diese Zeit / Frequenzkurve ist so ausgelegt, dass der Motor mit einem nicht linearen abnehmend schnell drehenden Feld gesteuert wird. Dadurch wird beispielsweise der technische Vorteil erreicht, dass eine geeignete Funktion zur einfachen Berechnung der abnehmenden Funktion der Frequenz der Bestromung bereitgestellt ist. Die nicht lineare Funktion kann vorzugsweise eine logarithmische Funktion sein.

In einer vorteilhaften Ausgestaltung des Verfahrens wird der Motor durch eine Last, jedoch nicht durch die Bestromung der Wicklungen verlangsamt. Dadurch wird beispielsweise der technische Vorteil erreicht, dass ein gegenüber einem stromlosen Motor verzögertes und schwingungsarmes Auslaufen erreicht wird.

In einer vorteilhaften Ausgestaltung des Verfahrens wird zu Beginn des unterstützten Auslaufvorgangs eine Rotorlage des Motors ermittelt und das Bestromen der Wicklungen mit einem Antriebsstrom erfolgt oder bei Erreichen einer Bedingung der Rotorlage endet.

Dadurch wird beispielsweise der technische Vorteil erreicht, dass ein besonders schwingungsarmes unterstütztes Auslaufen des Motors erfolgen kann.

Der erfindungsgemäße Hubkolben-Verdichter eines Kältegerätes, Klimageräts oder einer Wärmepumpe hat einen bürstenlosen Motor mit Wicklungen und eine Steuerung zum Anhalten des Motors ausgehend von einer Betriebsdrehzahl. Die Steuerung ist eingerichtet zum Durchführen eines unterstützten Auslaufvorgangs durch Bestromen der Wicklungen mit einem Antriebsstrom mit einer Frequenz, wobei die Frequenz gemäß einer vorgegebenen abnehmenden Funktion verläuft und wobei über einen Kompressionszyklus ein verlangsamen des Motors aufgrund einer Last überwiegt gegenüber einer Beschleunigung des Motors aufgrund der Bestromung. Mit dieser Einrichtung der Steuerung ist sichergestellt, dass der Motor nicht durch das angelegte Drehfeld aktiv gebremst wird, jedoch aber auch nicht unkontrolliert durch abrupte Lastwechsel in starke Schwingungen gerät und an die Verdichterkapsel schlägt.

Bei dem erfindungsgemäßen Hubkolben-Verdichter ist die Steuerung zum Anhalten des Motors derart eingerichtet, dass die vorgegebene abnehmende Funktion eine abnehmende nicht lineare Funktion ist. Dadurch wird beispielsweise der technische Vorteil erreicht, dass eine geeignete Funktion zur einfachen Berechnung der abnehmenden Funktion der Frequenz der Bestromung in der Steuerung bereitgestellt ist.

In einer vorteilhaften Ausgestaltung des Hubkolben-Verdichters ist die Steuerung zum Anhalten des Motors derart eingerichtet, dass der Motor durch eine Last, jedoch nicht durch die Bestromung der Wicklungen verlangsamt wird. Mit dieser Einrichtung der Steuerung wird beispielsweise der technische Vorteil erreicht, dass ein gegenüber einem stromlosen Motor verzögertes und schwingungsarmes Auslaufen erreicht wird.

In einer vorteilhaften Ausgestaltung des Hubkolben-Verdichters ist die Steuerung zum Anhalten des Motors derart eingerichtet, dass bei Erreichen der Zieldrehzahl eine Rotorlage des Motors ermittelt wird und das Bestromen der Wicklungen mit einem Antriebsstrom bei Erreichen einer Bedingung der Rotorlage erfolgt oder bei Erreichen einer Bedingung der Rotorlage endet. Dadurch wird beispielsweise der technische Vorteil erreicht, dass ein besonders schwingungsarmes unterstütztes Auslaufen des Motors erfolgen kann.

Ein Kältegerät, Klimagerät oder eine Wärmepumpe gemäß der Erfindung weist einen oben beschriebenen erfindungsgemäßen Hubkolben-Verdichter auf.

Ausführungsbeispiele der Erfindung sind in den Zeichnungen dargestellt und werden im Folgenden näher beschrieben.

Es zeigt dabei:
- Figur 1:: eine schematische Ansicht eines Kältegerätes gemäß einer Ausführungsform der Erfindung;
- Figur 2:: eine schematische Darstellung eines Kältegeräts mit einem Kältekreislauf und einer Verdichtersteuerung gemäß der Ausführungsform aus Fig. 1;
- Figur 3:: ein schematisches Diagramm einer Frequenzkurve und eines gesteuerten Drehfelds eines Hubkolbenverdichters zur Erläuterung einer Ausführungsform der Erfindung; und
- Figur 4:: ein Flussdiagramm des Verfahrens gemäß einer Ausführungsform der Erfindung

In den Figuren sind zur knappen Darstellung voneinander unabhängige Ausgestaltungen in derselben Ausführungsform realisiert. Identische Bezugszeichen in verschiedenen Figuren bezeichnen gleiche oder gleichwirkende Elemente. Die Ausgestaltungen zeigen einen Kühlschrank mit einem Lagerraum für Kühlgut, Kombinationen mit weiteren Lagerräumen, beispielsweise für Gefriergut, sind von der Erfindung mit umfasst.

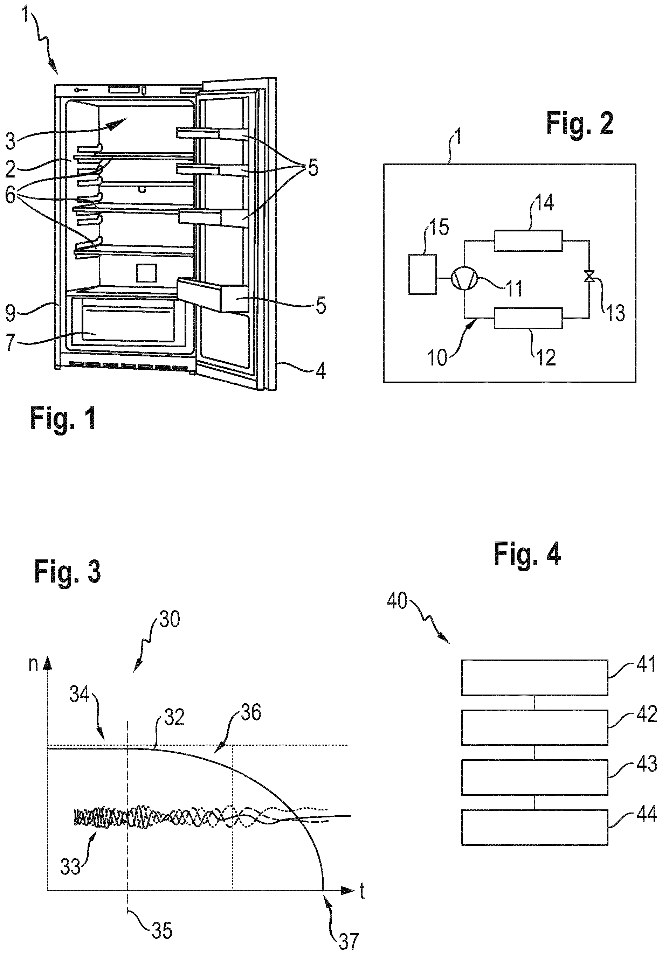

Die Fig. 1 zeigt in einer perspektivischen Darstellung ein Haushaltskältegerät 1, das einen wärmeisolierten Korpus 9 mit einem Innenbehälter 2 umfasst, der einen kühlbaren Innenraum 3 begrenzt. Der kühlbare Innenraum 3 ist zum Lagern von nicht näher dargestellten Lebensmitteln vorgesehen.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere ein Schubfach 7 angeordnet, in dem ebenfalls Lebensmittel gelagert werden können.

Das Haushaltskältegerät 1 aus Fig. 1 umfasst einen in der Fig. 2 gezeigten Kältemittelkreislauf 10 zum Kühlen des kühlbaren Innenraums 3. Im Falle des vorliegenden Ausführungsbeispiels umfasst der Kältemittelkreislauf 10 des kühlbaren Innenraums 3 einen Verdichter 11, einen dem Verdichter 11 nachgeschalteten Verflüssiger 12, eine dem Verflüssiger 12 nachgeschaltete Drosselvorrichtung 13, die insbesondere als ein Drossel- oder Kapillarrohr ausgeführt ist, und einen Verdampfer 14, der zwischen der Drosselvorrichtung 13 und dem Verdichter 11 angeordnet ist. Der Verdichter 11 ist vorzugsweise innerhalb eines Maschineraums des Haushaltkältegerätes 1 angeordnet, der sich insbesondere hinter dem Schubfach 7 befindet. Der Verdichter 11 ist ein Hubkolbenverdichter.

Das Haushaltskältegerät 1 umfasst im Falle des vorliegenden Ausführungsbeispiels eine Verdichtersteuerung 15 zur Steuerung des Verdichters 11. Die Verdichtersteuerung 15 ist ausgestaltet zur Durchführung des erfindungsgemäßen Verfahrens und steuert entsprechend dem Verfahren einen BLDC Motor des Verdichters 11.

Fig. 3 zeigt ein Diagramm 30 einer Frequenzkurve 32 und eines gesteuerten Drehfelds 33 eines Hubkolbenverdichters gemäß einer Ausführungsform der Erfindung. Mit der Frequenzkurve 32 ist die Drehzahl n des Motors oder alternativ die Drehfeldfrequenz gegen die Zeit t aufgetragen. Die Drehzahl ist zunächst in dem Abschnitt 34 der Frequenzkurve 32 konstant.

Zum Zeitpunkt 35 erhält die Steuerung 15 ein Signal zum Anhalten. Daraufhin schaltet die Steuerung 15 in einen Steuerbetrieb und beginnt das Durchführen des unterstützten Auslaufvorgangs. In diesem Betriebsmodus wird die Drehfeldfrequenz durch eine festgelegte Zeit- bzw. Frequenzkurve 32 gemäß Abschnitt 36 der Frequenzkurve 32 vorgegeben. Dabei erfolgt das Bestromen der Wicklungen mit einem Antriebsstrom mit einer Frequenz, wobei die Frequenz gemäß einer vorgegebenen abnehmenden Funktion verläuft und wobei über einen Kompressionszyklus ein Verlangsamen des Motors aufgrund einer Last überwiegt gegenüber einer Beschleunigung des Motors aufgrund der Bestromung. Dieser unterstützte Auslaufvorgang nutzt die Last des Motors zum verlangsamen und verzögert das Anhalten des Motors gegenüber einem Austrudeln, um einen schwingungsarmen Bremsvorgang zu erreichen. Im Zeitpunkt 37 endet die Bestromung und der Stillstand des Motors ist erreicht.

Zur Frequenzkurve 32 ist das gesteuerte Drehfeld 33 eines Hubkolbenverdichters mit drei Phasen für drei Wicklungen des Motors schematisch dargestellt. Während des Abschnitts 34 der Frequenzkurve 32 befindet sich der Hubkolbenverdichter in einem geregelten Normalbetrieb mit einer konstanten Drehzahl. Das Drehfeld 33 weist in diesem Abschnitt eine im Wesentlichen konstante Frequenz auf.

Während des Abschnitts 36 der Frequenzkurve 32 befindet sich der Hubkolbenverdichter in einem gesteuerten Betrieb mit einer abnehmenden Drehzahl. Das Drehfeld 33 weist in diesem Abschnitt eine abnehmende Frequenz auf, bis die Drehfeldfrequenz Null, bei dem steuerungsgemäßen Stillstand des Motors im Zeitpunkt 37, erreicht wird.

Fig. 4 zeigt ein Flussdiagramm 40 des Verfahrens gemäß einer Ausführungsform der Erfindung. Das Verfahren zum Anhalten eines Hubkolben-Verdichters, wobei der Verdichter einen bürstenlosen Motor mit Wicklungen aufweist, beginnt mit dem Verfahrensschritt Drehen 41 des Motors mit einer Betriebsdrehzahl. In Verfahrensschritt 42 wird ein Signal zum Anhalten erhalten. Auf dieses Signal hin erfolgt hier der optionale Verfahrensschritt Anfahren 43 einer Zielfrequenz. Dies kann ein geregeltes oder gesteuertes Anfahren sein. Nun erfolgt im folgenden Verfahrensschritt ein Durchführen 44 eines unterstützten Auslaufvorgangs durch Bestromen der Wicklungen mit einem Antriebsstrom mit einer Frequenz, wobei die Frequenz gemäß einer vorgegebenen abnehmenden Funktion verläuft und wobei über einen Kompressionszyklus ein Verlangsamen des Motors aufgrund einer Last überwiegt gegenüber einer Beschleunigung des Motors aufgrund der Bestromung.

Dem Drehen 41 des Motors mit einer Betriebsdrehzahl entspricht Abschnitt 34 der Frequenzkurve 32 in Fig. 3. Das Signal zum Anhalten wird in Fig. 3 zum Zeitpunkt 35 erhalten. Das optionale Anfahren 43 einer Zielfrequenz ist in Fig. 3 nicht realisiert. Dem Durchführen 44 des unterstützten Auslaufvorgangs entspricht in Fig. 3 Abschnitt 36 der Frequenzkurve 32.

### Bezugszeichenliste

- 1: Haushaltskältegerät
- 2: Innenbehälter
- 3: kühlbarer Innenraum
- 4: Türblatt
- 5: Türabsteller
- 6: Fachböden
- 7: Schublade
- 9: Korpus
- 10: Kältemittelkreislauf
- 11: Verdichter
- 12: Verflüssiger
- 13: Drosselvorrichtung
- 14: Verdampfer
- 15: Verdichtersteuerung
- 30: Diagramm
- 32: Frequenzkurve
- 33: Drehfeld
- 34, 36: Abschnitt der Frequenzkurve
- 35, 37: Zeitpunkt
- 40: Flussdiagramm
- 41: Verfahrensschritt Drehen mit einer Betriebsdrehzahl
- 42: Verfahrensschritt Signal erhalten
- 43: Verfahrensschritt Anfahren einer Zielfrequenz
- 44: Verfahrensschritt Durchführen eines unterstützten Auslaufvorgangs

## Patentansprüche

1. Verfahren zum Anhalten eines Hubkolben-Verdichters (11) eines Kältegerätes Klimageräts oder einer Wärmepumpe, wobei der Verdichter (11) einen bürstenlosen Motor mit Wicklungen aufweist, mit den Verfahrensschritten
- Drehen (41) des Motors mit einer Betriebsdrehzahl;
- Erhalten (42) eines Signals zum Anhalten;
- Durchführen (44) eines unterstützten Auslaufvorgangs durch Bestromen der Wicklungen mit einem Antriebsstrom mit einer Frequenz,
**dadurch gekennzeichnet, dass** bei dem Bestromen die Frequenz gemäß einer vorgegebenen nicht linear abnehmenden Funktion (32) verläuft, wobei über einen Kompressionszyklus ein Verlangsamen des Motors aufgrund einer Last überwiegt gegenüber einer Beschleunigung des Motors aufgrund der Bestromung, und wobei ein Drehfeld (33) eine abnehmende Frequenz aufweist, bis die Drehfeldfrequenz Null bei dem steuerungsgemäßen Stillstand des Motors erreicht wird.

2. Verfahren nach Anspruch 1, **dadurch gekennzeichnet, dass** die abnehmende nicht lineare Funktion (32) eine logarithmische Funktion ist.

3. Verfahren nach Anspruch 1 oder 2, **dadurch gekennzeichnet, dass** der Motor durch eine Last, jedoch nicht durch die Bestromung der Wicklungen verlangsamt wird.

4. Verfahren nach einem der vorhergehenden Ansprüche, **dadurch gekennzeichnet, dass** zu Beginn des unterstützten Auslaufvorgangs eine Rotorlage des Motors ermittelt wird und das Bestromen der Wicklungen mit dem Antriebsstrom bei Erreichen einer Bedingung der Rotorlage erfolgt.

5. Verfahren nach einem der vorhergehenden Ansprüche, **dadurch gekennzeichnet, dass** zu Beginn des unterstützten Auslaufvorgangs eine Rotorlage des Motors ermittelt wird und das Bestromen der Wicklungen mit dem Antriebsstrom bei Erreichen einer weiteren Bedingung der Rotorlage endet.

6. Verfahren nach einem der vorhergehenden Ansprüche, **dadurch gekennzeichnet, dass** nach dem Erhalten (42) eines Signals zum Anhalten ein Anfahren (43) einer vorgegebenen Zieldrehzahl erfolgt.

7. Hubkolben-Verdichter (11) eines Kältegerätes, Klimageräts oder einer Wärmepumpe, mit einem bürstenlosen Motor mit Wicklungen und einer Steuerung (15) zum Anhalten des Motors ausgehend von einer Betriebsdrehzahl, wobei die Steuerung (15) eingerichtet ist zum Erhalten (42) eines Signals zum Anhalten und zum Durchführen eines unterstützten Auslaufvorgangs durch Bestromen der Wicklungen mit einem Antriebsstrom mit einer Frequenz, **dadurch gekennzeichnet, dass** die Frequenz gemäß einer vorgegebenen nicht linear abnehmenden Funktion (32) verläuft, wobei über einen Kompressionszyklus ein Verlangsamen des Motors aufgrund einer Last überwiegt gegenüber einer Beschleunigung des Motors aufgrund der Bestromung, und wobei ein Drehfeld (33) eine abnehmende Frequenz aufweist, bis die Drehfeldfrequenz Null bei dem steuerungsgemäßen Stillstand des Motors erreicht wird.

8. Hubkolben-Verdichter nach Anspruch 7, **dadurch gekennzeichnet, dass** die Steuerung (15) zum Anhalten des Motors derart eingerichtet ist, dass der Motor durch eine Last, jedoch nicht durch die Bestromung der Wicklungen verlangsamt wird.

9. Hubkolben-Verdichter nach einem der Ansprüche 7 oder 8, **dadurch gekennzeichnet, dass** die Steuerung (15) zum Anhalten des Motors derart eingerichtet ist, dass zu Beginn des unterstützten Auslaufvorgangs eine Rotorlage des Motors ermittelt wird und das Bestromen der Wicklungen mit einem Antriebsstrom bei Erreichen einer Bedingung der Rotorlage erfolgt.

10. Hubkolben-Verdichter nach einem der Ansprüche 7 oder 8, **dadurch gekennzeichnet, dass** die Steuerung (15) zum Anhalten des Motors derart eingerichtet ist, dass zu Beginn des unterstützten Auslaufvorgangs eine Rotorlage des Motors ermittelt wird und das Bestromen der Wicklungen mit einem Antriebsstrom bei Erreichen einer Bedingung der Rotorlage endet.

11. Kältegerät (1), Klimagerät oder Wärmepumpe mit einem Verdichter (15) nach einem der Ansprüche 7 bis 10.

## Claims

1. Method for stopping a reciprocating piston compressor (11) of a refrigeration appliance, air conditioning appliance or a heat pump, wherein the compressor (11) has a brushless motor with windings, with the method steps
- rotating (41) the motor at an operating rotational speed;
- obtaining (42) a signal to stop;
- performing (44) a supported run-off procedure by energising the windings with a drive current with a frequency,
**characterised in that**, on energisation, the frequency runs according to a predefined function (32) that decreases in a non-linear manner, wherein a deceleration of the motor due to a load prevails over a compression cycle compared to an acceleration of the motor due to the energisation, and wherein a rotary field (33) has a decreasing frequency, until the rotary field frequency of zero is reached when the motor is at a standstill from a control perspective.

2. Method according to claim 1, **characterised in that** the decreasing, non-linear function (32) is a logarithmic function.

3. Method according to claim 1 or 2, **characterised in that** the motor is decelerated by a load, but not by the energisation of the windings.

4. Method according to one of the preceding claims, **characterised in that** a rotor position of the motor is ascertained at the start of the supported run-off procedure and the energisation of the windings with the drive current takes place when a condition of the rotor position is met.

5. Method according to one of the preceding claims, **characterised in that** a rotor position of the motor is ascertained at the start of the supported run-off procedure and the energisation of the windings with the drive current ends when a further condition of the rotor position is met.

6. Method according to one of the preceding claims, **characterised in that** an approaching (43) of a predefined target rotational speed takes place after the obtaining (42) of a signal to stop.

7. Reciprocating piston compressor (11) of a refrigeration appliance, air conditioning appliance or a heat pump, with a brushless motor with windings and a controller (15) for stopping the motor starting from an operating rotational speed, wherein the controller (15) is configured for obtaining (42) a signal to stop and for performing a supporting run-off procedure by energising the windings with a drive current with a frequency, **characterised in that** the frequency runs according to a predefined function (32) that decreases in a non-linear manner, wherein a deceleration of the motor due to a load prevails over a compression cycle compared to an acceleration of the motor due to the energisation, and wherein a rotary field (33) has a decreasing frequency, until the rotary field frequency of zero is reached when the motor is at a standstill from a control perspective.

8. Reciprocating piston compressor according to claim 7, **characterised in that** the controller (15) is configured for stopping the motor in such a manner that the motor is decelerated by a load, but not by the energisation of the windings.

9. Reciprocating piston compressor according to one of claims 7 or 8, **characterised in that** the controller (15) is configured for stopping the motor in such a manner that a rotor position of the motor is ascertained at the start of the supported run-off procedure and the energisation of the windings with a drive current takes place when a condition of the rotor position is met.

10. Reciprocating piston compressor according to one of claims 7 or 8, **characterised in that** the controller (15) is configured for stopping the motor in such a manner that a rotor position of the motor is ascertained at the start of the supported run-off procedure and the energisation of the windings with the drive current ends when a condition of the rotor position is met.

11. Refrigeration appliance (1), air conditioning appliance or heat pump with a compressor (15) according to one of claims 7 to 10.

## Revendications

1. Procédé d'arrêt d'un compresseur à piston (11) d'un appareil frigorifique, d'un appareil de climatisation ou d'une pompe à chaleur, dans lequel le compresseur (11) comprend un moteur sans balais doté de bobinages, le procédé comprenant les étapes suivantes :
- rotation (41) du moteur à un régime de fonctionnement,
- obtention (42) d'un signal d'arrêt,
- exécution (44) d'un processus de décélération assisté en alimentant en courant les bobinages par un courant d'attaque d'une certaine fréquence,
**caractérisé en ce que**, lors de l'alimentation en courant, la fréquence évolue selon une fonction décroissante non linéaire prédéfinie (32),
dans lequel, pendant un cycle de compression, un ralentissement du moteur dû à une charge prime sur une accélération du moteur due à l'alimentation en courant, et dans lequel un champ tournant (33) présente une fréquence décroissante, jusqu'à ce que la fréquence du champ tournant atteigne zéro lors de l'arrêt commandé du moteur.

2. Procédé selon la revendication 1, **caractérisé en ce que** la fonction décroissante non linéaire (32) est une fonction logarithmique.

3. Procédé selon la revendication 1 ou 2, **caractérisé en ce que** le moteur est ralenti par une charge, toutefois pas par l'alimentation en courant des bobinages.

4. Procédé selon l'une des revendications précédentes, **caractérisé en ce qu'**une position de rotor du moteur est déterminée au début du processus de décélération assisté, et l'alimentation en courant des bobinages par le courant d'attaque s'effectue lorsqu'une condition de position de rotor est atteinte.

5. Procédé selon l'une des revendications précédentes, **caractérisé en ce qu'**une position de rotor du moteur est déterminée au début du processus de décélération assisté, et l'alimentation en courant des bobinages par le courant d'attaque se termine lorsqu'une autre condition de position de rotor est atteinte.

6. Procédé selon l'une des revendications précédentes, **caractérisé en ce qu'**après l'obtention (42) d'un signal d'arrêt, un démarrage (43) d'un régime cible prédéterminé est exécuté.

7. Compresseur à piston (11) d'un appareil frigorifique, d'un appareil de climatisation ou d'une pompe à chaleur, comprenant un moteur sans balais avec des bobinages et une commande (15) pour arrêter le moteur à partir d'un régime de fonctionnement, dans lequel la commande (15) est configurée pour obtenir (42) un signal d'arrêt et pour exécuter un processus de décélération assisté en alimentant les bobinages par un courant d'attaque d'une certaine fréquence,
**caractérisé en ce que** la fréquence évolue selon une fonction décroissante non linéaire prédéfinie (32),
dans lequel, pendant un cycle de compression, un ralentissement du moteur dû à une charge prime sur une accélération du moteur due à l'alimentation en courant, et dans lequel un champ tournant (33) présente une fréquence décroissante, jusqu'à ce que la fréquence du champ tournant atteigne zéro lors de l'arrêt commandé du moteur.

8. Compresseur à piston selon la revendication 7, **caractérisé en ce que** la commande (15) est configurée pour arrêter le moteur de sorte que le moteur est ralenti par une charge, et non pas par l'alimentation en courant des bobinages.

9. Compresseur à piston selon la revendication 7 ou 8, **caractérisé en ce que** la commande (15) est configurée pour arrêter le moteur de sorte qu'au début du processus de décélération assisté, une position de rotor du moteur est déterminée, et l'alimentation en courant des bobinages par un courant d'attaque s'effectue lorsqu'une condition de position de rotor est atteinte.

10. Compresseur à piston selon l'une des revendications 7 ou 8, **caractérisé en ce que** la commande (15) est configurée pour arrêter le moteur de sorte qu'au début du processus de décélération assisté, une position de rotor du moteur est déterminée et l'alimentation en courant des bobinages par le courant d'attaque se termine lorsqu'une condition de position de rotor est atteinte.

11. Appareil frigorifique (11), appareil de climatisation ou pompe à chaleur comprenant un compresseur (15) selon l'une des revendications 7 à 10.
